# EUROPEAN PATENT APPLICATION

(11) **EP 0 891 860 A2**
(43) Date of publication of application: **20.01.1999**
(21) Application number: 98305605.2
(22) Date of filing: 15.07.1998
(51) Int. Cl.: B32B 5/24, B32B 15/14, B32B 3/24, B29C 45/16

(54) **Fire-resistant composite panels**

(30) Priority: 18.07.1997 GB 9715208
(71) Applicant: Promat Fire Protection Limited, Near Royston, Herts SG8 5RL (GB)
(72) Inventor: Wray, Robert, Meldreth, Near Royston, Herts, SG8 5RL (GB)
(74) Representative: Lewin, John Harvey

(57) **Abstract**

A fire-resistant composite panel comprises a core (1) of rigid foamed plastics material which is bonded to a metal outer layer (2,3) over part of the panel. A layer of intumescent mat (6,7) is interposed between the core and the metal layer. The intumescent mat is perforated with holes to permit bonding therethrough between the core and the metal layer.

## Description

This invention relates to fire-resistant composite panels and a method for manufacturing them.

Composite panels are known in which metal outer liners are bonded to a core of polyurethane, polyisocyanurate or other similar foam systems. The fire-resistance of a construction using such composite panels is measured in accordance with the relevant parts of BS476 or other similar National, European or International standards. The composite panels of this type are typically used as the walls or roofs of cold stores or as the outer insulating skin of large buildings. To date, most similar panel systems will only satisfy the integrity criterion of the fire test standard for 20-25 minutes. In order to achieve a minimum of 30 minutes fire resistance, it would normally be required to increase the thickness of the panels to an extent which is uneconomic and would result in the panels being too heavy. Additionally, production times would increase unacceptably. There is therefore a problem in designing composite panels of this kind which have improved fire resistance but without increased thickness and weight and without unduly long production times.

We have surprisingly found that this problem can be solved by interposing a thin intumescent mat between the foam core and the metal outer liner, the intumescent mat being perforated to permit bonding of the foam to the metal through the perforations.

The present invention thus provides a fire-resistant composite panel comprising a core of rigid foamed plastics material which is bonded to a metal outer layer over part of the panel, wherein a layer of intumescent mat is interposed between the core and the metal layer, the intumescent mat being perforated with holes to permit bonding therethrough between the core and the metal layer.

The invention also provides a method of preparing a fire-resistant composite panel, which comprises placing at least one metal sheet, which is to form an outer layer over part of the panel, against at least one side of an enclosure in which the panel is to be formed; placing a perforated intumescent mat against the face of the or each metal sheet facing into the enclosure; injecting a foamable plastics material into the enclosure; and foaming the plastics material whereby it passes through the perforations of the intumescent mat and contacts the or each metal sheet, and forms a rigid foam core of the composite panel, the core being bonded through the perforations of the intumescent mat to the or each metal sheet.

The metal outer layer is generally present on two opposing faces of the panel and absent from intervening faces. The composite panel is preferably a substantially rectangular block. Two opposite faces thereof comprise metal outer liners, preferably of steel. The metal outer liners may have a short in-turned peripheral lip to aid in structural integrity. but the faces of the panel between the metal-clad faces are substantially entirely un-clad foam (otherwise the insulating properties of the panels would be lost). The foam is preferably of polyurethane or polyisocyanurate, but other similar foam systems, such as polystyrene, can also be used in the invention.

The intumescent mat is preferably a graphite based mineral fibre stabilised material. Such mats are commercially available as flexible sheets with typical thicknesses of 1.0mm to 3.0mm. A typical composition includes 20% exfoliating graphite together with acrylic binder and diabase rockwool fibrous constituents. For use in our invention, the content of exfoliating graphite is preferably at least 20%. Intumescent mats of this kind will generally commence activation at about 190°C, have an average expansion ratio of about 3:1 and develop a peak expansion force of about 8kg at around 400°C. We prefer the intumescent mat to be relatively thin, such as about 1mm in thickness, so that no penalty in terms of weight or thickness is incurred.

To ensure that the structural integrity of the panels is retained, the intumescent sheet is regularly perforated with holes that are sufficiently large to allow the flowing foam to adhere to the metal sheets through these holes, but small enough to close by intumescent action in the event of a fire.

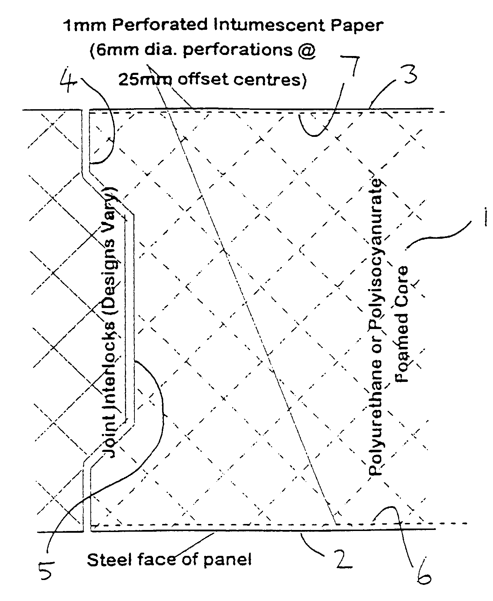

Reference is now made to the accompanying drawing, which is a diagrammatic plan view of part of a composite panel according to an embodiment of the invention.

As shown in the drawing, the composite panel includes a polyurethane or polyisocyanurate foamed core 1. Opposing faces 2 and 3 of the panel are clad by steel outer liners. The faces of the panel between the steel clad faces, such as that shown at 4, are not steel clad but comprise uncoated foam. Insulation throughout the thickness of the panel between the opposing steel clad faces is thereby maintained. Side faces of the panel which, in a construction, abut adjoining panels will generally be shaped to form a joint interlock, such as that shown at 5 in the drawing.

A layer of perforated intumescent mat or paper 6, 7 is interposed between the foamed core 1 and the steel outer liners 2,3. In the embodiment shown, the intumescent paper is 1mm thick. A suitable material is Intumescent Mat Grade One, commercially available under the trade name Kofire from Technical Fibre Products Limited of Kendal, England. The intumescent paper is suitably perforated with 6mm diameter holes, the centres of which are offset from each other by 25mm. The foamed core is bonded to the steel outer liner through these perforations. The actual perforation pattern may need to be adjusted in particular applications, and trials will indicate the most suitable pattern.

The manufacturing process of the panels according to the invention is the same as for conventional panels, except for the addition of the intumescent mat to the internal faces of the steel outer liner before it is foam filled. As the plastics material foams. it will adhere to any metal surface which it contacts, so that the rigid foam eventually formed becomes bonded to the metal surface. In the manufacturing process of this invention, two steel sheets are held parallel to each other with a space between them. The edges are retained by heated mould parts. The intumescent sheet is fixed to the steel sheets on what will become their inner faces in advance of placing them in the heated platens (formers). Foam is injected through ports in the heated platens. The foam expands on contact with the platens and fills the space between the two steel sheets. The whole assembly is held in place until the foaming chemical reaction is complete. The chemical reaction forces the foam through the perforations in the intumescent sheet and permits bonding to the inner faces of the steel sheets. When the plastics material has set to a rigid foam. the resulting composite panel is then released. As compared with conventional panels. there is no alteration to the overall appearance since the intumescent material is completely contained within the panel.

An alternative manufacturing process starts from a ready-formed slab of rigid plastics foam, e.g. polystyrene. The metal sheets are sprayed on one side with liquid adhesive, e.g. polyurethane adhesive, and then pressed against the slab with the perforated intumescent sheet sandwiched in between. The adhesive passes through the perforations and bonds the slab to the metal sheets.

When subjected to fire, the core of this type of panel does not melt but rather pyrolises at about 140°C. At a similar temperature, the intumescent material on the fire side is progressively activated, forming an insulating char to replace the receding foam core. The pyrolised core and mineral fibre based intumescent char combine together to provide a stable fire retardant barrier, thus improving the overall fire resistance of the complete wall or roof system. This allows the remaining foam core to continue to offer insulating performance and so extends the total insulation period offered by the panels when exposed to fire. Finally, the intumescent mat on the non-fire side gives an additional measure of protection as it expands with the passage of heat through the panel at the end of the fire protection period. The panels according to the invention thus have a positive effect both on the insulation criterion and on the integrity criterion of the fire test standard.

The joints between adjacent panels in a wall or roof system can potentially be an area of weakness when subjected to fire. The joints can be protected by fixing a self-adhesive strip of intumescent material, which may suitably be 6mm thick, into the rebates of the joints and securing by cam-locks when panels are assembled on site. The joints may also be covered by external steel cover strips.

The 6mm intumescent is essentially the same material as that in the 1mm perforated mat. Its fibrous nature prevents cold-bridging at the joints. Its intumescent qualities provide a good fire seal.

## Claims

1. A fire-resistant composite panel comprising a core of rigid foamed plastics material which is bonded to a metal outer layer over part of the panel, wherein a layer of intumescent mat is interposed between the core and the metal layer, the intumescent mat being perforated with holes to permit bonding therethrough between the core and the metal layer.

2. A composite panel according to claim 1, in which the metal outer layer is present on two opposing faces of the panel and absent from intervening faces.

3. A composite panel according to claim 1 or 2, in which the plastics material is polyurethane or polyisocyanurate.

4. A composite panel according to any of claims 1 or 3, in which the intumescent mat has a content of exfoliating graphite of at least 20% by weight.

5. A method of preparing a fire-resistant composite panel, which comprises placing at least one metal sheet, which is to form an outer layer over part of the panel, against at least one side of an enclosure in which the panel is to be formed; placing a perforated intumescent mat against the face of the or each metal sheet facing into the enclosure; injecting a foamable plastics material into the enclosure; and foaming the plastics material whereby it passes through the perforations of the intumescent mat and contacts the or each metal sheet. and forms a rigid foam core of the composite panel, the core being bonded through the perforations of the intumescent mat to the or each metal sheet.
